(19) Europäisches Patentamt
European Patent Office
Office européen des brevets

(11) **EP 1 679 694 B1**

(12) **EUROPEAN PATENT SPECIFICATION**

(45) Date of publication and mention of the grant of the patent:
**05.09.2007 Bulletin 2007/36**

(51) Int Cl.:
**G10L 15/22** (2006.01)

(21) Application number: **06100063.4**

(22) Date of filing: **04.01.2006**

(54) **Confidence score for a spoken dialog system**

Konfidenzmaß für ein Sprachdialogsystem

Mesure de fiabilité pour un système de dialogue vocal

(84) Designated Contracting States:
**DE FR GB**

(30) Priority: **05.01.2005 US 29278**

(43) Date of publication of application:
**12.07.2006 Bulletin 2006/28**

(73) Proprietor: **AT&T Corp.**
**New York, NY 10013-2412 (US)**

(72) Inventors:
• **Hakkani-Tur, Dilek, Z.**
**Castro Valley, CA 94552 (US)**
• **Riccardi, Giuseppe**
**Hoboken, NJ 07030 (US)**
• **Tur, Gokhan**
**Denville, NJ 07834 (US)**

(74) Representative: **Harding, Richard Patrick et al**
**Marks & Clerk,**
**4220 Nash Court,**
**Oxford Business Park South**
**Oxford OX4 2RU (GB)**

(56) References cited:
• SCHLANGEN D: "Causes and strategies for requesting clarification in dialogue" 5TH SIGDIAL WORKSHOP ON DISCOURSE AND DIALOGUE, [Online] 30 April 2004 (2004-04-30), XP002378389 Boston Retrieved from the Internet: URL:http://sigdial04.eml-research.de/sigdi al/final/final_download.php?id=5> [retrieved on 2006-04-25]
• RAYMOND C ET AL: "On the use of confidence for statistical decision in dialogue strategies" 5TH SIGDIAL WORKSHOP ON DISCOURSE AND DIALOGUE, [Online] 30 April 2004 (2004-04-30), XP002378390 Boston Retrieved from the Internet: URL:http://sigdial04.eml-research.de/sigdi al/final/final_download.php?id=26> [retrieved on 2006-04-25]
• HAKKANI-TUR D ET AL: "Error Prediction in Spoken Dialog: From Signal-to-Noise Ratio to Semantic Confidence Scores" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 March 2005 (2005-03-18), pages 1041-1044, XP002378391 ISBN: 0-7803-8874-7
• GOKHAN TUR ET AL: "IMPROVING SPOKEN LANGUAGE UNDERSTANDING USING WORD CONFUSION NETWORKS" ICSLP 2002 : 7TH INTERNATIONAL CONFERENCE ON SPOKEN LANGUAGE PROCESSING. DENVER, COLORADO, SEPT. 16 - 20, 2002, INTERNATIONAL CONFERENCE ON SPOKEN LANGUAGE PROCESSING. (ICSLP), ADELAIDE : CAUSAL PRODUCTIONS, AU, vol. VOL. 4 OF 4, 16 September 2002 (2002-09-16), page 1137, XP002378392 ISBN: 1-876346-40-X

EP 1 679 694 B1

**Description**

## BACKGROUND OF THE INVENTION

Field of the Invention

The present invention relates to spoken dialog systems and more specifically to improving error prediction in spoken dialog systems.

Introduction

An objective of spoken dialog systems is to identify intents of a speaker, expressed in natural language, and take actions accordingly to satisfy requests. Typically, in a natural spoken dialog system, the speaker's utterance is recognized using an automatic speech recognizer (ASR). Then, the intent of the speaker is identified from the recognized utterance, using a spoken language understanding (SLU) component. This step may be framed as a classification problem for call routing systems. For example, if the user says "I would like to know my account balance", then the corresponding intent or semantic label (call-type) would be "Request(Balance)", and the action would be prompting the user's balance, after getting the account number, or transferring the user to the billing department.

For each utterance in the dialog, the SLU component returns a call-type associated with a confidence score. If the SLU component confidence score is more than a confirmation threshold, a dialog manager takes the appropriate action as in the example above. If the intent is vague, the user is presented with a clarification prompt by the dialog manager. If the SLU component is not confident about the intent, depending on its confidence score, the utterance is either simply rejected by re-prompting the user (i.e., the confidence score is less than the rejection threshold) or a confirmation prompt is played (i.e., the SLU component confidence score is in between confirmation and rejection thresholds).

It is clear that the SLU component confidence score is very important for management of the spoken dialog. However, relying solely on the SLU component confidence scores for determining a dialog strategy may be less than optimal for several reasons. First of all, with spontaneous telephone speech, the typical word error rate (WER) for ASR output is about 30%; in other words, one in every three words is misrecognized. Misrecognizing a word may result in misunderstanding a complete utterance, even though all other words may be correct. For example, misrecognizing the word "balance" in an utterance above may negatively effect the SLU component confidence. Second, SLU component confidence scores may depend on an estimated call-type, and other utterance features, such as a length of an utterance in words, or contextual features, such as a previously played prompt.

The article "Causes and strategies for requesting clarification in dialogue", Schlangen D, 5th Sigdial workshop on discourse and dialogue, 2004, discloses combination of speech recognition confidence and semantic/pragmatic confidence.

## SUMMARY OF THE INVENTION

According to the invention there are provided a method as set forth in claim 1, a spoken dialog system as set forth in claim 10, and a machine-readable medium as set forth in claim 18.

Preferred embodiments are set forth in the dependent claims.

## BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Fig. 1 illustrates an exemplary spoken dialog system consistent with principles of the invention;

Fig. 2 is a functional block diagram illustrating an exemplary processing system that may be used to implement one or more components of the spoken dialog system of Fig. 1;

Fig. 3 is a flowchart illustrating an exemplary procedure that may be used in implementations consistent with the principles of the invention;

Fig. 4 shows a table that displays properties of training, development, and test data used in experiments;

Fig. 5 illustrates spoken language understanding accuracy for automatic speech recognition and spoken language understanding confidence scores in an implementation consistent with the principles of the invention; and

Fig. 6 is a graph that illustrates accuracy of results in implementations consistent with the principles of the invention.

## DETAILED DESCRIPTION OF THE INVENTION

Various embodiments of the invention are discussed in detail below. While specific implementations are discussed, it should be understood that this is done for illustration purposes only. A person skilled in the relevant art will recognize that other components and configurations may be used without parting from the scope of the invention, which is defined in the claims.

Spoken Dialog Systems

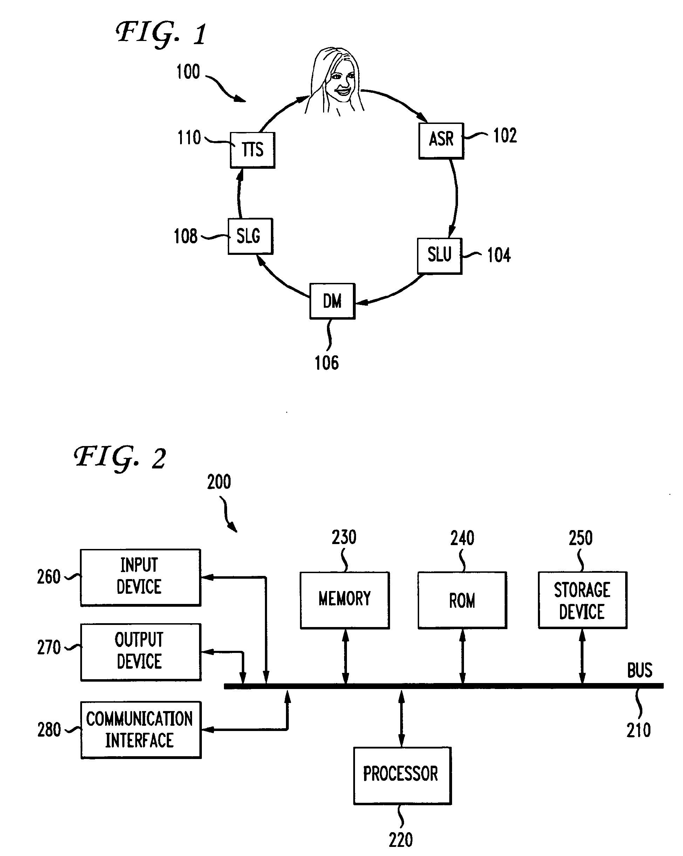

Fig. 1 is a functional block diagram of an exemplary natural language spoken dialog system 100 consistent with the principles of the invention. Natural language spoken dialog system 100 may include an automatic speech recognition (ASR) module 102, a spoken language understanding (SLU) module 104, a dialog management (DM) module 106, a spoken language generation (SLG) module 108, and a text-to-speech (TTS) module 110.

ASR module 102 may analyze speech input and may provide a transcription of the speech input as output. SLU module 104 may receive the transcribed input and may use a natural language understanding model to analyze the group of words that are included in the transcribed input to derive a meaning from the input. DM module 106 may receive the meaning or intent of the speech input from SLU module 104 and may determine an action, such as, for example, providing a spoken response, based on the input. SLG module 108 may generate a transcription of one or more words in response to the action provided by DM module 106. TTS module 110 may receive the transcription as input and may provide generated audible speech as output based on the transcribed speech.

Thus, the modules of system 100 may recognize speech input, such as speech utterances, may transcribe the speech input, may identify (or understand) the meaning of the transcribed speech, may determine an appropriate response to the speech input, may generate text of the appropriate response and from that text, generate audible "speech" from system 100, which the user then hears. In this manner, the user can carry on a natural language dialog with system 100. Those of ordinary skill in the art will understand the programming languages and means for generating and training ASR module 102 or any of the other modules in the spoken dialog system. Further, the modules of system 100 may operate independent of a full dialog system. For example, a computing device such as a smartphone (or any processing device having a phone capability) may have an ASR module wherein a user may say "call mom" and the smartphone may act on the instruction without a "spoken dialog."

Fig. 1 is an exemplary spoken dialog system. Other spoken dialog systems may include other types of modules and may have different quantities of various modules.

Fig. 2 illustrates an exemplary processing system 200 in which one or more of the modules of system 100 may be implemented. Thus, system 100 may include at least one processing system, such as, for example, exemplary processing system 200. System 200 may include a bus 210, a processor 220, a memory 230, a read only memory (ROM) 240, a storage device 250, an input device 260, an output device 270, and a communication interface 280. Bus 210 may permit communication among the components of system 200.

Processor 220 may include at least one conventional processor or microprocessor that interprets and executes instructions. Memory 230 may be a random access memory (RAM) or another type of dynamic storage device that stores information and instructions for execution by processor 220. Memory 230 may also store temporary variables or other intermediate information used during execution of instructions by processor 220. ROM 240 may include a conventional ROM device or another type of static storage device that stores static information and instructions for processor 220. Storage device 250 may include any type of media, such as, for example, magnetic or optical recording media and its corresponding drive.

Input device 260 may include one or more conventional mechanisms that permit a user to input information to system 200, such as a keyboard, a mouse, a pen, a voice recognition device, etc. Output device 270 may include one or more conventional mechanisms that output information to the user, including a display, a printer, one or more speakers, or a medium, such as a memory, or a magnetic or optical disk and a corresponding disk drive. Communication interface 280 may include any transceiver-like mechanism that enables system 200 to communicate via a network. For example, communication interface 180 may include a modem, or an Ethernet interface for communicating via a local area network (LAN). Alternatively, communication interface 180 may include other mechanisms for communicating with other devices and/or systems via wired, wireless or optical connections.

System 200 may perform functions in response to processor 220 executing sequences of instructions contained in a computer-readable medium, such as, for example, memory 230, a magnetic disk, or an optical disk. Such instructions may be read into memory 230 from another computer-readable medium, such as storage device 250, or from a separate device via communication interface 280.

Overview

In existing spoken dialog systems, once an utterance is recognized, a component, such as, for example, a spoken language understanding (SLU) component may examine each utterance, $\hat{w} = w_1, w_2, ... w_n$ and assign an intent (or a call-type), $\hat{c}(\hat{w})$, to the utterance as well as a confidence score, $e(\hat{c})$, obtained from a semantic classifier. This score may be used to guide the dialog strategies. If the intent is not vague and the score is higher than some threshold $t_1$ (that is, $e(\hat{c}) > t_1$), then the call-type assignment may be accepted by the dialog manager, and appropriate action may be taken. If the confidence score is lower than another threshold $t_2$ (that is, $e(\hat{c}) \le t_2$), then the utterance may be rejected, and the user may be re-prompted. If the score is between the two thresholds (that *is, $t_2 < e(c) \le t_1$*) then the user may be asked a confirmation question to verify the estimated intent. These thresholds may be selected to optimize the spoken dialog performance, by using a development test set, and setting the thresholds to the optimum thresholds for this set.

ASR and SLU confidence scores may be combined to form a combined score to provide an implementation, consistent with the principles of the invention, which is more robust with respect to ASR errors and which improves acceptance, confirmation and rejection strategies during spoken dialog processing. In other implementations consistent with the principles of the invention, other utterance and dialog level information may also be combined with ASR and SLU confidence scores. For example, a length of the utterance (in words), or a call-type, assigned by the semantic classifier, may be combined with ASR and SLU confidence scores to provide a combined score.

ASR Confidence Scores

ASR confidence scores for each utterance may be computed using the confidence scores of the words in an utterance. For example, ASR module 102 may compute word posterior probabilities for each word $w_j$, of each utterance from a lattice output of an ASR, where $j = 1,...,n$. The posterior probabilities may be used as word confidence scores $cs_j$ for each word $w_j$. The word confidence scores, $cs_j$, may be used to assign an ASR score, $e(w)$, to the utterance:

$$e(\hat{w}) = f(cs_1, ..., cs_n)$$

where $f$ may be, for example, an arithmetic mean function.

One method that may be used to compute word confidence scores may be based on the pivot alignment for strings in a word lattice. A detailed explanation of this algorithm and a comparison of its performance with other approaches is presented in "A General Algorithm for Word Graph Matrix Decomposition," *Proceedings* of *ICASSP,* 2003, by Dilek Hakkani-Tür and Giuseppe Riccardi.

SLU Confidence Scores

In a commercial spoken dialog system, one objective of an SLU component is to understand the intent of the user. This objective could be framed as a classification problem. Semantic classification may be considered the task of mapping an ASR output of an utterance into one or more call-types. Given a set of examples S = $\{(W_1, c_1),...,(W_m, c_m)\}$, the problem may be to associate each instance $W_i \in X$ into a target label $c_i \in C$ where C is a finite set of semantic labels that are compiled automatically or semi automatically from the data. It may often be useful to associate some confidence score to each of the classes. For example, in a Bayesian classifier a confidence score of a class, $c_j$, is nothing but

$$P(c_j \mid W) = \frac{P(W \mid c_j) \times P(c_j)}{\sum_i P(W \mid c_i) \times P(c_i)}$$

A discriminative classifier, for example, Boostexter may be employed in implementations consistent with the principles of the invention. Boostexter is described in "Boostexter: A boosting-based system for text categorization," Machine Learning, vol. 39, no.2/3, pp. 135-168, 2000, by R.E. Schapire and Y. Singer The above discriminative classifier may be an implementation of the AdaBoost algorithm, which iteratively learns simple weak base classifiers. One method for converting the output of AdaBoost to confidence scores uses a logistic function:

$$P(c = c_j \mid W) = \frac{1}{1 + e^{-2 \times f(W)}}$$

where f(W) is a weighted average of the base classifiers produced by AdaBoost. Thus, the SLU confidence score may be:

$$e(\hat{c}) \approx \max_{c_j} P(c = c_j \mid W)$$

Combining Scores

The problem of estimating a better confidence score for each utterance may become a classification problem by combining various information sources to find the best function, g, to combine multiple features, and estimate a new score, ns:

$$ns = g(\hat{w}, e(\hat{c}), \mid \hat{w} \mid, \hat{c}(\hat{w}))$$

Generic Process

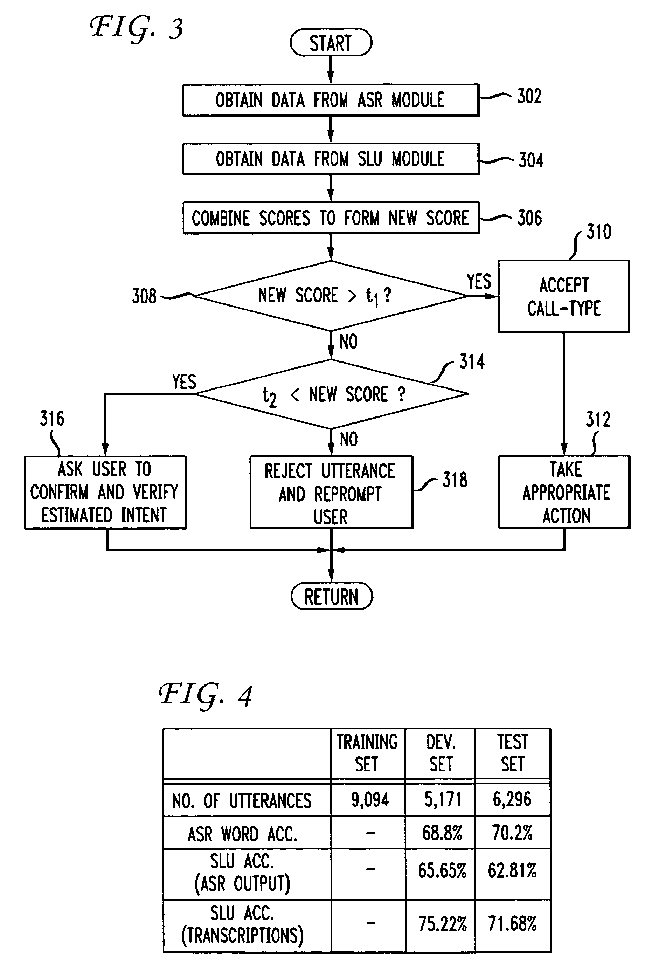

Fig. 3 is a flowchart that explains a generic process that may be used in an implementation consistent with the principles of the invention. The process may begin by a module, such as, for example, DM module 106 obtaining data from, or being provided with, data from ASR module 102(act 302). The data may include an utterance confidence score, as well as other data. Next, DM module 106 may obtain, or be provided with, an SLU confidence score from, for example, SLU module 104 (act 304). Other data from SLU module 104 may also be obtained or provided. The data from ASR module 102 and SLU module 104 may be combined by a combining component to form a new combined confidence score (act 306) In implementations consistent with the principles of the invention, the combining component may be included in DM module 106 or in SLU module 104.

Next, DM module 106 may analyze the combined score. For example, the new combined score may be compared with a threshold, $t_1$ (act 308). The thresholds may be real numbers in the range of the confidence scores. For example, if the combined confidence is a real number between 0 and 1, then the threshold should also be between 0 and 1. If the combined score is greater than $t_1$, then the score may indicate a high confidence level and DM 106 may accept the call-type assigned by the semantic classifier (act 310) and may then take appropriate action (act 312), such as, for example, connecting a user who has a question about certain charges on his bill to the Billing Department.

If the new combined score is less than $t_1$, then DM 106 may determine whether the new score is less than or equal to a second threshold, $t_2$, which is lower than $t_1$ (act 314). If the new score is less than or equal to $t_2$, then the new score may be unacceptably low and DM module 106 may reject the utterance and re-prompt the user for a new utterance (act 318). If the new score is greater than $t_2$, but less than or equal to $t_1$, then DM module 106 may ask the user to confirm the utterance and estimated intent (act 314).

Score Factorization

In one implementation, the combined score may be formed (act 306: Fig. 3) by the combining component by simply multiplying ASR and SLU confidence scores as follows:

$$ns = e(\hat{w})^{\alpha_1} \times e(\hat{c})^{\alpha_2}$$

where $\alpha_1$ and $\alpha_2$ are scaling factors. The above formula assumes that the ASR and SLU confidence scores are independent from one another. The scaling factors may be determined such that they maximize the accuracy on a development set.

Linear Regression

In another implementation consistent with the principles of the invention, the combining component may use linear regression to fit a line to a set of points in *d*-dimensional space. In this implementation, each feature may form a different dimension. Separate regression parameters, $\beta_i$ for each feature, i, may be learned by using least squares estimation. The combining component may then use linear regression to compute a combined confidence score for utterances, as in the below formula:

$$ns = \beta_1 + \beta_2 * e(\hat{w}) + \beta_3 * e(\hat{c}) + \beta_4 * |\hat{w}|$$

where *length*, $|\hat{w}|$, is the number of words in a hypothesized utterance. Thus, in act 302 (Fig. 3), ASR module 102 may provide the number of words in the hypothesized utterance to the combining component, as well as an ASR confidence score for the utterance. In act 306, the above formula, may be implemented within the combining component to compute the combined score.

Logistic Regression

In yet another implementation, consistent with the principles of the invention, logistic regression may be used by the combining component to calculate a combined confidence score. Logistic regression is similar to linear regression, but fits a curve to a set of points instead of a line. As in the linear regression implementation, in act 302, ASR module 102 may provide the number of words in the hypothesized utterance to the combining component, as well as an ASR confidence score for the utterance. Thus, the combining component, may compute a combined score according to the following formula:

$$ns = \frac{1}{1 + e^{\gamma_1 + \gamma_2 * e(\hat{w}) + \gamma_3 * e(\hat{c}) + \gamma_4 * |\hat{w}|}} \quad \text{(act 306: Fig. 3)}$$

Logistic regression parameters, $\gamma_2, \gamma_3, \gamma_4$ may be learned by using the well-known Newton-Raphson Method.

Decision Trees

In another implementation, consistent with the principles of the invention, the combining component may use decision trees (DTs) to classify an instance of an utterance by sorting down the tree from a root to some leaf node following a set of if-then-else rules using predefined features. In this implementation, continuous features (for example, the confidence scores from ASR module 102 and SLU module 104) may be automatically quantized during decision tree training. Additional features may be used to augment the DTs, such as, for example, a length (in words) of an utterance to be classified. In experiments, various feature sets, such as the length of the utterance, the previous prompt played to the user, etc., have been used, and the probability of an utterance being correctly classified at the corresponding leaf of the decision tree was used as the new combined score (act 306: Fig. 3). These probabilities may be computed from the training set, or a development set. One way of computing the probability of an utterance being correctly classified at the corresponding leaf of the decision tree is by dividing the number of utterances that are correctly classified and ended at that leaf of the tree by the number of all utterances that ended at that leaf of the tree for the training or development set.

Experiments and Results

A commercial spoken dialog system for an automated customer care application was used, in order to test the approach. There were 84 unique call-types in the application, and the test set call-type perplexity, computed using prior call-type distribution estimated from training data, was 32.64. The data was split into three sets: a training set, a development set, and a test set. The first set was used for training an ASR language model and a SLU model, which were then used to recognize and classify the other two sets. An off-the shelf acoustic model was used. The development set was used to estimate parameters of a score combination function. Some properties of the data sets are given in Fig. 4. SLU accuracy (SLU Acc.) is the percentage of utterances, whose top-scoring call-type is among the true call-types. The top-scoring call-type of an utterance, is the call-type that is given the highest score by the semantic classifier. The true call-types are call-types assigned to each utterance by human labelers.

In order to simulate the effect of this approach in a deployed application, the test set was selected from the latest days of data collection. Therefore there is a mismatch in the performance of the ASR module and the SLU module on the two test sets. A difference in the distribution of the call-types was observed due to changes in customer traffic.

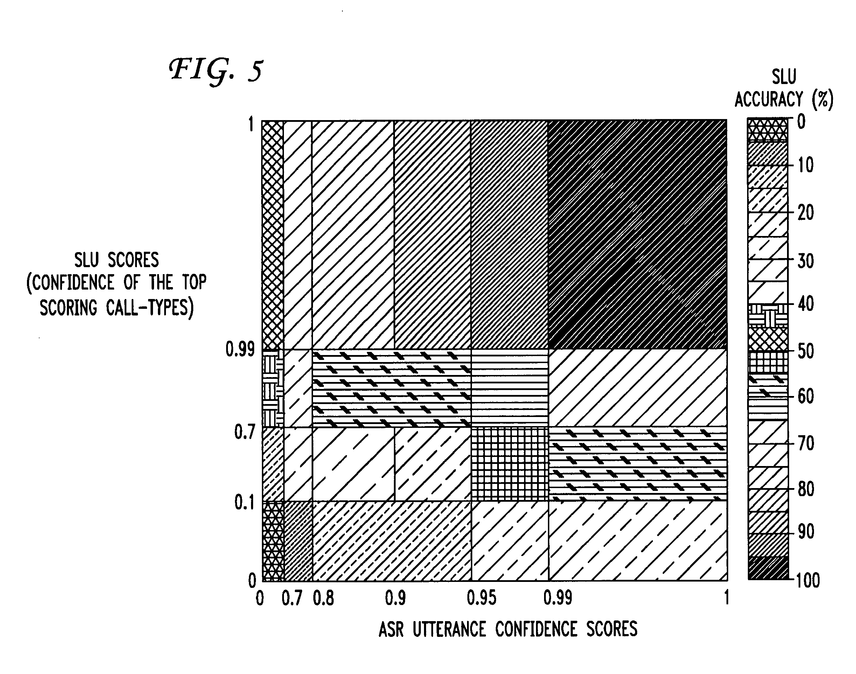

In order to check the feasibility of improving the accuracy of accepted utterances, the SLU accuracy for various ASR and SLU confidence score bins were plotted. Fig. 5 shows a 4-dimensional plot for these bins, where the x-axis is the ASR confidence score bin, and the y-axis is the SLU confidence score bin. The shading of each rectangle, corresponding to these bins, shows the SLU accuracy in that bin, and the size of each rectangle is proportional to the number of examples in that bin. As can be seen from this Fig. 5, when the two scores are high, SLU accuracy is also high. When both scores are low, SLU accuracy is also low. However, when the ASR confidence score is low, SLU accuracy is also low, even though SLU confidence score is high. Fig. 5 confirms that the SLU score alone is not sufficient for determining the accuracy of an estimated intent.

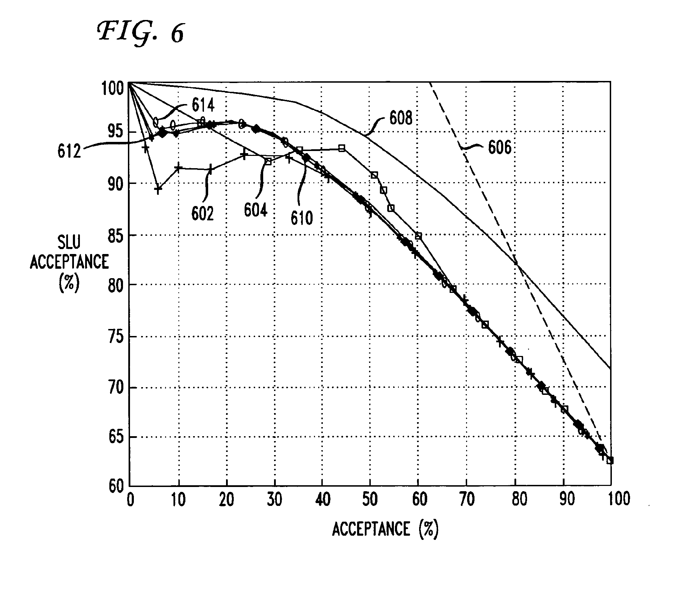

Fig. 6 is a graph that illustrates results of the experiments for combining multiple information sources. The x-axis is the percentage of the accepted utterances, and the y-axis is the percentage of utterances that are correctly classified. The baseline used only the SLU scores for this purpose (plot 602). One upper bound was an experiment, in which all erroneously classified utterances were rejected by comparing them with their true call-types. This was a cheating experiment. The upper bound was computed by comparing the call-types with the true call-types, which are available after manual labeling. The purpose of the upper-bound is to see how much improvement can be obtained if one has perfect combined confidence scores, which is $x_1$ for all misclassified utterances, and $x_2$ for all correctly classified utterances and $x_1$ is smaller than $x_2$ (plot 606). As another upper bound, a manual transcription of each utterance was used, and the SLU confidence score was used without the ASR confidence score (plot 608). Plot 604 shows results using the DT implementation. Plot 610 shows results using the score factorization implementation. Plot 612 shows results of the linear regression implementation. Plot 614 shows results of the logistic regression implementation. As Fig. 6 shows, all methods for combining features with SLU confidence scores helped to improve the accuracy of the accepted utterances. Multiplication and regression methods performed very similarly, and both resulted in a 4% improvement in accuracy when around 20% of the utterances were accepted without any confirmation prompt. The decision tree implementation outperformed other combination methods for higher acceptance rates. Conclusion

Embodiments within the scope of the present invention may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other embodiments of the invention may be practiced in network computing environments with many types of computer system configurations, including personal computers, hand-held devices, multiprocessor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

Although the above description may contain specific details, they should not be construed as limiting the claims in any way. Other configurations of the described embodiments of the invention are part of the scope of this invention. For example, in the disclosed implementations, the features were limited to the ASR and SLU confidence scores, utterance length, $|\hat{w}|$, and the top scoring call-type associated with the utterance, $\hat{c}(\hat{w})$. However, many other features can be utilized to help compute a combined confidence score. The invention is defined in the claims.

**Claims**

1.  A method for a spoken dialog system, the method comprising:

    providing a first confidence score indicating a confidence level in speech recognition result of recognizing an utterance (302);
    providing a second confidence score indicating a confidence level of mapping the speech recognition result to an intent (304);
    combining the first confidence score with the second confidence score to form a combined confidence score (306), **characterized in that** the combined confidence score is computed based on the number of words in a hypothesized utterance from the speech recognition result; and
    determining whether to accept the intent based on the combined confidence score (308, 310, 314).

2.  The method of claim 1, wherein the determining whether to accept the intent based on the combined confidence score further comprises:

    comparing the combined confidence score to a first threshold (308); and
    accepting the intent when the combined confidence score is greater than the first threshold (310).

3.  The method of claim 1 or 2, wherein the determining whether to accept the intent based on the combined confidence score further comprises:

    comparing the combined confidence score to a second threshold (314); and
    rejecting the intent when the combined confidence score is less than or equal to the second threshold (318), and optionally the determining whether to accept the intent based on the combined confidence score further comprises:

    re-prompting a user when the combined confidence score is less than or equal to the second threshold (316).

4.  The method of any preceding claim, wherein the determining whether to accept the intent based on the combined confidence score further comprises:

    comparing the combined confidence score to a first threshold and a second threshold (308, 314); and
    asking a user to confirm a hypothesized utterance from the speech recognition result and an estimated intent from the mapping the speech recognition result to an intent when the second threshold is less than the combined confidence score which is less than or equal to the first threshold (316).

5.  The method of any preceding claims, wherein the combining the first confidence score with the second confidence score to form a combined confidence score further comprises:

    using a linear regression technique to compute the combined score.

6.  The method of any preceding claim, wherein:

    the combining the first confidence score with the second confidence score to form a combined confidence score further comprises:
    computing the combined score according to: $ns = \beta_1 + \beta_2 \times e(\hat{w}) + \beta_3 \times e(\hat{c}) + \beta_4 \times |\hat{w}|$,

    where ns is the combined confidence score, $\beta_1, \beta_2, \beta_3,$ and $\beta_4$ are regression parameters, e(w) is the first confidence score, $e(\hat{c})$ is the second confidence score, and $|\hat{w}|$ is the number of words in the hypothesized utterance.

7.  The method of any preceding claim, wherein the combining the first confidence score with the second confidence score to form a combined confidence score further comprises:

    using a logistic regression technique to compute the combined score.

8.  The method of any of claims 1 to 4 and 7, wherein:

the combining the first confidence score with the second confidence score to form a combined confidence score further comprises:

computing the combined confidence score according to ns = 1 1+ $e^{\gamma 1+\gamma 2^*e(\hat{w})+\gamma 3^*e(\hat{c})+\gamma 4^*|\hat{w}|}$, where ns is the combined confidence level, $\gamma_1, \gamma_2, \gamma_3$, and $\gamma_4$ are regression parameters, e(w) is the first confidence score, $e(\hat{c})$ is the second confidence score, and $|\hat{w}|$ is the number of words in the hypothesized utterance.

9. The method of any preceding claim, wherein the combining the first confidence score with the second confidence score to form a combined confidence score further comprises:

using a decision tree technique to determine the combined confidence score, the decision tree technique preferably comprising:

following a set of rules to sort down a tree from a root to a leaf node; and
computing the combined confidence score based on a probability that the intent of the utterance is correctly classified at the leaf node.

10. A spoken dialog system (200) comprising:

a first component (302) configured to provide a first confidence score indicating a confidence level in a speech recognition result of recognizing an utterance;
a second component (304) configured to provide a second confidence score indicating a confidence level of mapping the speech recognition result to an intent;
a third component configured to combine (306) the first confidence score with the second confidence score to form a combined confidence score, **characterized in that** the combined confidence score is computed based on the number of words in a hypothesis from the speech recognition results; and
a fourth component configured to determine whether to accept the intent based on the combined confidence score (308, 310, 314).

11. The spoken dialog system of claim 10, wherein the third component is included in one of the second component or the fourth component.

12. The spoken dialog system of claim 10 or 11, wherein the fourth component is further configured to:

compare the combined confidence score to a first threshold (308); and
accept the intent when the combined confidence score is greater than the first threshold (310).

13. The spoken dialog system of any of claims 10 to 12, wherein the fourth component is further configured to:

compare the combined confidence score to a second threshold (314); and
reject the intent when the combined confidence score is less than or equal to the second threshold (318), and optionally the fourth component is further configured to:

re-prompt a user when the combined confidence score is less than or equal to the second threshold (316).

14. The spoken dialog system of any of claims 10 to 13, wherein the fourth component is further configured to:

compare the combined confidence score to a first threshold and a second threshold (308, 314); and
ask a user to confirm a hypothesized utterance from the speech recognition result and an estimated intent from the mapping the speech recognition result to an intent when the second threshold is less than the combined confidence score which is less than or equal to the first threshold.

15. The spoken dialog system of any of claims 10 to 14, wherein:

the first component is further configured to provide the number of words in the hypothesized utterance from the speech recognition result, and
the third component is further configured to compute the combined confidence score according to: $ns = \beta_1, + \beta_2 \times e(\hat{w}) + \beta_3 \times e(\hat{c}) + \beta_4 \times |\hat{w}|$, where ns is the combined confidence score, $\beta_1, \beta_2, \beta_3$, and $\beta_4$ are regression

parameters, $e(\hat{w})$ is the first confidence score, $e(\hat{c})$ is the second confidence score, and $|\hat{w}|$ is the number of words in the hypothesized utterance.

16. The spoken dialog system of any of claims 10 to 14, wherein
   the first component is further configured to provide the number of words in the hypothesized utterance from the speech recognition result, and
   the third component is further configured to compute the combined confidence score according to:

$$ns = \frac{1}{1+e^{\gamma_1+\gamma_2 \times e(\hat{w})+\gamma_3 \times e(\hat{c})+\gamma_4 \times |\hat{w}|}}$$ , where ns is the combined confidence score, $\gamma_1, \gamma_2, \gamma_3$, and $\gamma_4$ are regression

parameters, $e(\hat{w})$ is the first confidence score, $e(\hat{c})$ is the second confidence score, and $|\hat{w}|$ is the number of words in the hypothesized utterance.

17. The spoken dialog system of any of claims 10 to 16, wherein the third component is further configured to:

   use a decision tree technique to determine the combined confidence score.

18. A machine-readable medium having a plurality of machine-executable instructions included therein, the plurality of instructions comprising:

   instructions for providing a first confidence score indicating a confidence level in a speech recognition result of recognizing an utterance (302);
   instructions for providing a second confidence score indicating a confidence level of mapping the speech recognition result to an intent (304);
   instructions for combining the first confidence score with the second confidence score to form a combined confidence score (306), **characterized in that** the combined confidence score is computed based on the number of words in a hypothesized utterance from the speech recognition result; and
   instructions for determining whether to accept the intent based on the combined confidence score (308, 310, 314).

19. The machine-readable medium of claim 18, further comprising:

   instructions for comparing the combined confidence score to a first threshold (308); and
   instructions for accepting the intent when the combined confidence score is greater than the first threshold (310).

20. The machine-readable medium of claim 18 or 19, further comprising:

   instructions for comparing the combined confidence score to a second threshold (314); and
   instructions for rejecting the intent when the combined confidence score is less than or equal to the second threshold (318), and optionally further comprising:

      instructions for re-prompting a user when the combined confidence score is less than or equal to the second threshold (316).

21. The machine-readable medium of any of claims 18 to 20, further comprising:

   instructions for comparing the combined confidence score to a first threshold and a second threshold (308, 314); and
   instructions for asking a user to confirm a hypothesized utterance from the speech recognition result and an estimated intent from the mapping the speech recognition result to an intent when the second threshold is less than the combined confidence score which is less than or equal to the first threshold (316).

22. The machine-readable medium of claim 21, further comprising:

   instructions for providing the number of words in the hypothesized utterance from the speech recognition result, and
   instructions for computing the combined confidence score according to: $ns = \beta_1 + \beta_2 \times e(\hat{w}) + \beta_3 \times e(\hat{c}) + \beta_4 \times |\hat{w}|$,

where ns is the combined confidence score, $\beta_1, \beta_2, \beta_3$, and $\beta_4$ are regression parameters, e(w) is the first confidence score, e(c) is the second confidence score, and $|\hat{w}|$ is the number of words in the hypothesized utterance.

**23.** The machine-readable medium of claim 21, further comprising:

instructions for providing the number of words in the hypothesized utterance from the speech recognition result, and

instructions for computing the combined confidence score according to:

$$ns = \frac{1}{1 + e^{\gamma_1 + \gamma_2 \times e(\hat{w}) + \gamma_3 \times e(\hat{c}) + \gamma_4 \times |\hat{w}|}}\ ,$$

where ns is the combined confidence score, $\gamma_1$, $\gamma_2$, $\gamma_3$, and $\gamma_4$ are regression parameters, $e(\hat{w})$ is the first confidence score, e(c) is the second confidence score, and $|\hat{w}|$ is the number of words in the hypothesized utterance.

**24.** The machine-readable medium of any of claims 18 to 23, further comprising:

instructions for using a decision tree technique to determine the combined score.

## Patentansprüche

**1.** Verfahren für ein Sprachdialogsystem, wobei das Verfahren umfasst:

Bereitstellen eines ersten Konfidenzmaßes, das einen Konfidenzgrad im Spracherkennungsergebnis der Erkennung einer Äußerung (302) anzeigt;
Bereitstellen eines zweiten Konfidenzmaßes, das einen Konfidenzgrad des Mappings des Spracherkennungsergebnisses auf eine Absicht (304) anzeigt;
Kombinieren des ersten Konfidenzmaßes mit dem zweiten Konfidenzmaß, um ein kombiniertes Konfidenzmaß (306) zu bilden, **dadurch gekennzeichnet, dass** das kombinierte Konfidenzmaß, beruhend auf der Anzahl von Wörtern in einer vorausgesetzten Äußerung vom Spracherkennungsergebnis, berechnet wird; und
Bestimmen, ob die auf dem kombinierten Konfidenzmaß (308, 310, 314) beruhende Absicht akzeptiert werden soll.

**2.** Verfahren nach Anspruch 1, wobei das Bestimmen, ob die Absicht, die auf dem kombinierten Konfidenzmaß beruht, akzeptiert werden soll, weiter umfasst:

Vergleichen des kombinierten Konfidenzmaßes mit einem ersten Schwellwert (308); und
Akzeptieren der Absicht, wenn das kombinierte Konfidenzmaß größer als der erste Schwellwert (310) ist.

**3.** Verfahren nach Anspruch 1 oder 2, wobei das Bestimmen, ob die auf dem kombinierten Konfidenzmaß beruhende Absicht akzeptiert werden soll, weiter umfasst:

Vergleichen des kombinierten Konfidenzmaßes mit einem zweiten Schwellwert (314); und
Zurückweisen der Absicht, wenn das kombinierte Konfidenzmaß geringer als oder gleich dem zweiten Schwellwert (318) ist und optional das Bestimmen, ob die auf dem kombinierten Konfidenzmaß beruhende Absicht akzeptiert werden soll, weiter umfasst:

Erneutes Prompten eines Users, wenn das kombinierte Konfidenzmaß geringer als oder gleich dem zweiten Schwellwert (316) ist.

**4.** Verfahren nach einem beliebigen vorhergehenden Anspruch, wobei das Bestimmen, ob die auf dem kombinierten Konfidenzmaß beruhende Absicht akzeptiert werden soll, weiter umfasst:

Vergleichen des kombinierten Konfidenzmaßes mit einem ersten Schwellwert und einem zweiten Schwellwert (308, 314); und

einen User zu bitten eine vorausgesetzte Äußerung vom Spracherkennungsergebnis und eine geschätzte Absicht vom Mapping des Spracherkennungsergebnisses zu einer Absicht zu bestätigen, wenn der zweite Schwellwert geringer als das kombinierte Konfidenzmaß ist, das geringer als oder gleich dem ersten Schwellwert (316) ist.

5.  Verfahren nach einem beliebigen der vorhergehenden Ansprüche, wobei das Kombinieren des ersten Konfidenzmaßes mit dem zweiten Konfidenzmaß, um ein kombiniertes Konfidenzmaß zu bilden, weiter umfasst:

Verwenden einer linearen Regressionsverfahrensweise, um das kombinierte Maß zu berechnen.

6.  Verfahren nach einem beliebigen vorhergehenden Anspruch, wobei:

das Kombinieren des ersten Konfidenzmaßes mit dem zweiten Konfidenzmaß, um ein kombiniertes Konfidenzmaß zu bilden, weiter umfasst:
Berechnen des kombinierten Maßes nach: $ns = \beta_1 + \beta_2 \times e(\hat{w}) + \beta_3 \times e(\hat{c}) + \beta_4 \times |\hat{w}|$, wobei ns das kombinierte Konfidenzmaß ist, $\beta_1$, $\beta_2$, $\beta_3$ und $\beta_4$ Regressionsparameter sind, $e(\hat{w})$ das erste Konfidenzmaß ist, $e(\hat{c})$ das zweite Konfidenzmaß ist und $|\hat{w}|$ die Anzahl von Wörtern in der vorausgesetzten Äußerung ist.

7.  Verfahren nach einem beliebigen vorhergehenden Anspruch, wobei das Kombinieren des ersten Konfidenzmaßes mit dem zweiten Konfidenzmaß, um ein kombiniertes Konfidenzmaß zu bilden, weiter umfasst:

Verwenden einer logistischen Regressionsverfahrensweise, um das kombinierte Maß zu berechnen.

8.  Verfahren nach einem beliebigen der Ansprüche 1 bis 4 und 7, wobei:

das Kombinieren des ersten Konfidenzmaßes mit dem zweiten Konfidenzmaß, um ein kombiniertes Konfidenzmaß zu bilden, weiter umfasst:

Berechnen des kombinierten Konfidenzmaßes nach

$$ns = \frac{1}{1 + e^{\gamma_1 + \gamma_2 \cdot e(\hat{w}) + \gamma_3 \cdot e(\hat{c}) + \gamma_4 \cdot |\hat{w}|}},$$

wobei ns der kombinierte Konfidenzgrad ist, $\gamma_1$, $\gamma_2$, $\gamma_3$ und $\gamma_4$ Regressionsparameter sind, $e(w)$ das erste Konfidenzmaß ist, $e(\hat{c})$ das zweite Konfidenzmaß ist und $|\hat{w}|$ die Anzahl von Wörtern in der vorausgesetzten Äußerung ist.

9.  Verfahren nach einem beliebigen vorhergehenden Anspruch, wobei das Kombinieren des ersten Konfidenzmaßes mit dem zweiten Konfidenzmaß, um ein kombiniertes Konfidenzmaß zu bilden, weiter umfasst:

Verwenden einer Entscheidungsbaum-Verfahrensweise, um das kombinierte Konfidenzmaß zu bestimmen, wobei die Entscheidungsbaum-Verfahrensweise vorzugsweise umfasst:

Befolgen eines Regelsatzes zum Abwärtssortieren eines Baums von einer Wurzel zu einem Astknoten; und Berechnen des kombinierten Konfidenzmaßes auf der Basis einer Wahrscheinlichkeit, dass die Absicht der Äußerung am Astknoten korrekt klassifiziert ist.

10. Sprachdialogsystem (200) umfassend:

eine erste Komponente (302), die konfiguriert ist, ein erstes Konfidenzmaß bereitzustellen, das einen Konfidenzgrad in einem Spracherkennungsergebnis der Erkennung einer Äußerung anzeigt;
eine zweite Komponente (304), die konfiguriert ist ein zweites Konfidenzmaß bereitzustellen, das einen Konfidenzgrad des Mappings des Spracherkennungsergebnisses zu einer Absicht anzeigt;
eine dritte Komponente (306), die konfiguriert ist das erste Konfidenzmaß mit dem zweiten Konfidenzmaß zu kombinieren, um ein kombiniertes Konfidenzmaß zu bilden, **dadurch gekennzeichnet, dass** das kombinierte Konfidenzmaß auf der Basis der Anzahl von Wörtern in einer Hypothese aus dem Spracherkennungsergebnis berechnet wird; und

eine vierte Komponente, die konfiguriert ist, zu bestimmen, ob die auf dem kombinierten Konfidenzmaß (308, 310, 314) beruhende Absicht akzeptiert werden soll.

**11.** Sprachdialogsystem des Anspruchs 10, wobei die dritte Komponente in entweder der zweiten Komponente oder der vierten Komponente inbegriffen ist.

**12.** Sprachdialogsystem des Anspruchs 10 oder 11, wobei die vierte Komponente weiter konfiguriert ist:

das kombinierte Konfidenzmaß mit einem ersten Schwellwert (308) zu vergleichen; und

die Absicht zu akzeptieren, wenn das kombinierte Konfidenzmaß größer als der erste Schwellwert (310) ist.

**13.** Sprachdialogsystem nach einem beliebigen der Ansprüche 10 bis 12, wobei die vierte Komponente weiter konfiguriert ist:

das kombinierte Konfidenzmaß mit einem zweiten Schwellwert (314) zu vergleichen; und

die Absicht zurückzuweisen, wenn das kombinierte Konfidenzmaß geringer als oder gleich dem zweiten Schwellwert (318) ist und die vierte Komponente optional weiter konfiguriert ist:

einen User erneut zu prompten, wenn das kombinierte Konfidenzmaß geringer als oder gleich dem zweiten Schwellwert (316) ist.

**14.** Sprachdialogsystem nach einem beliebigen der Ansprüche 10 bis 13, wobei die vierte Komponente weiter konfiguriert ist:

Das kombinierte Konfidenzmaß mit einem ersten Schwellwert und einem zweiten Schwellwert (308, 314) zu vergleichen; und

einen User zu bitten eine vorausgesetzte Äußerung vom Spracherkennungsergebnis und eine geschätzte Absicht vom Mapping des Spracherkennungsergebnisses zu einer Absicht zu bestätigen, wenn der zweite Schwellwert geringer als das kombinierte Konfidenzmaß ist, das geringer als oder gleich dem ersten Schwellwert ist.

**15.** Sprachdialogsystem nach einem beliebigen der Ansprüche 10 bis 14, wobei:

die erste Komponente weiter konfiguriert ist, die Anzahl von Wörtern in der vorausgesetzten Äußerung vom Spracherkennungsergebnis bereitzustellen; und

die dritte Komponente weiter konfiguriert ist, das kombinierte Konfidenzmaß zu berechnen nach: $ns = \beta_1 + \beta_2 \times e(\hat{w}) + \beta_3 \times e(\hat{c}) + \beta_4 \times |\hat{w}|$, wobei ns das kombinierte Konfidenzmaß ist, $\beta_1$, $\beta_2$, $\beta_3$ und $\beta_4$ Regressionsparameter sind, e(w) das erste Konfidenzmaß ist, e(c) das zweite Konfidenzmaß ist und $|\hat{w}|$ die Anzahl von Wörtern in der vorausgesetzten Äußerung ist.

**16.** Sprachdialogsystem nach einem beliebigen der Ansprüche 10 bis 14, wobei:

die erste Komponente weiter konfiguriert ist, die Anzahl von Wörtern in der vorausgesetzten Äußerung vom Spracherkennungsergebnis bereitzustellen; und

die dritte Komponente weiter konfiguriert ist, das kombinierte Konfidenzmaß zu berechnen nach:

$$ns = \frac{1}{1 + e^{\gamma_1 + \gamma_2 \times e(\hat{w}) + \gamma_3 \times e(\hat{c}) + \gamma_4 \times |\hat{w}|}},$$

wobei ns das kombinierte Konfidenzmaß ist, $\gamma_1$, $\gamma_2$, $\gamma_3$ and $\gamma_4$ Regressionsparameter sind, e($\hat{w}$) das erste Konfidenzmaß ist, e($\hat{c}$) das zweite Konfidenzmaß ist und $|\hat{w}|$ die Anzahl von Wörtern in der vorausgesetzten Äußerung ist.

**17.** Sprachdialogsystem nach einem beliebigen der Ansprüche 10 bis 16, wobei die dritte Komponente weiter konfiguriert ist:

eine Entscheidungsbaum-Verfahrensweise zu verwenden, um das kombinierte Konfidenzmaß zu bestimmen.

18. Maschinenlesbares Medium mit einer Mehrheit von darin inbegriffenen maschinenausführbaren Instruktionen, wobei die Mehrheit von Instruktionen umfasst:

Instruktionen zum Bereitstellen eines ersten Konfidenzmaßes, das einen Konfidenzgrad in einem Spracherkennungsergebnis der Erkennung einer Äußerung (302) anzeigt;
Instruktionen zum Bereitstellen eines zweiten Konfidenzmaßes, das einen Konfidenzgrad des Mappings des Spracherkennungsergebnisses auf eine Absicht (304) anzeigt;
Instruktionen zum Kombinieren des ersten Konfidenzmaßes mit dem zweiten Konfidenzmaß, um ein kombiniertes Konfidenzmaß (306) zu bilden, **dadurch gekennzeichnet, dass** das kombinierte Konfidenzmaß, beruhend auf der Anzahl von Wörtern in einer vorausgesetzten Äußerung vom Spracherkennungsergebnis, berechnet wird;
Instruktionen zum Bestimmen, ob die auf dem kombinierten Konfidenzmaß (308, 310, 314) beruhende Absicht akzeptiert werden soll.

19. Das maschinenlesbare Medium des Anspruchs 18, weiter umfassend:

Instruktionen zum Vergleichen des kombinierten Konfidenzmaßes mit einem ersten Schwellwert (308); und
Instruktionen für das Akzeptieren der Absicht, wenn das kombinierte Konfidenzmaß größer als der erste Schwellwert (310) ist.

20. Das maschinenlesbare Medium des Anspruchs 18 oder 19, weiter umfassend:

Instruktionen zum Vergleichen des kombinierten Konfidenzmaßes mit einem zweiten Schwellwert (314); und
Instruktionen für das Zurückweisen der Absicht, wenn das kombinierte Konfidenzmaß geringer als oder gleich dem zweiten Schwellwert (318) ist und optional weiter umfassend:

Instruktionen für erneutes Prompten eines Users, wenn das kombinierte Konfidenzmaß geringer als oder gleich dem zweiten Schwellwert (316) ist.

21. Das maschinenlesbare Medium eines beliebigen der Ansprüche 18 bis 20, weiter umfassend:

Instruktionen zum Vergleichen des kombinierten Konfidenzmaßes mit einem ersten Schwellwert und einem zweiten Schwellwert (308, 314); und
Instruktionen einen User zu bitten eine vorausgesetzte Äußerung vom Spracherkennungsergebnis und eine geschätzte Absicht vom Mapping des Spracherkennungsergebnisses zu einer Absicht zu bestätigen, wenn der zweite Schwellwert geringer als das kombinierte Konfidenzmaß ist, das geringer als oder gleich dem ersten Schwellwert (316) ist.

22. Das maschinenlesbare Medium des Anspruchs 21, weiter umfassend:

Instruktionen zum Bereitstellen der Anzahl von Wörtern in der vorausgesetzten Äußerung vom Spracherkennungsergebnis; und
Instruktionen zum Berechnen des kombinierten Konfidenzmaßes nach: $ns = \beta_1 + \beta_2 \times e(\hat{w}) + \beta_3 \times e(\hat{c}) + \beta_4 \times |\hat{w}|$, wobei ns das kombinierte Konfidenzmaß ist, $\beta_1$, $\beta_2$, $\beta_3$ und $\beta_4$ Regressionsparameter sind, $e(\hat{w})$ das erste Konfidenzmaß ist, $e(\hat{c})$ das zweite Konfidenzmaß ist und $|\hat{w}|$ die Anzahl von Wörtern in der vorausgesetzten Äußerung ist.

23. Das maschinenlesbare Medium des Anspruchs 21, weiter umfassend:

Instruktionen zum Bereitstellen der Anzahl von Wörtern in der vorausgesetzten Äußerung vom Spracherkennungsergebnis; und
Instruktionen zum Berechnen des kombinierten Konfidenzmaßes nach:

$$ns = \frac{1}{1 + e^{\gamma_1 + \gamma_2 \times e(\hat{w}) + \gamma_3 \times e(\hat{c}) + \gamma_4 \times |\hat{w}|}}$$

,

wobei ns das kombinierte Konfidenzmaß ist, $\gamma_1$, $\gamma_2$, $\gamma_3$ und $\gamma_4$ Regressionsparameter sind, $e(\hat{w})$ das erste Konfidenzmaß ist, $e(\hat{c})$ das zweite Konfidenzmaß ist und $|\hat{w}|$ die Anzahl von Wörtern in der vorausgesetzten Äußerung ist.

**24.** Das maschinenlesbare Medium eines beliebigen der Ansprüche 18 bis 23, weiter umfassend:

Instruktionen zur Verwendung einer Entscheidungsbaum-Verfahrensweise, um das kombinierte Konfidenzmaß zu bestimmen.

## Revendications

**1.** Procédé pour un système de dialogue vocal, le procédé comprenant:

la fourniture d'un premier indice de pertinence de confiance indiquant un niveau de confiance dans le résultat de reconnaissance vocale de la reconnaissance d'un énoncé (302);
la fourniture d'un second indice de pertinence de confiance indiquant un niveau de confiance de l'association du résultat de reconnaissance vocale à une intention (304);
la combinaison du premier indice de pertinence de confiance avec le second indice de pertinence de confiance pour former un indice de pertinence de confiance combiné (306) **caractérisé en ce que** l'indice de pertinence de confiance combiné est calculé sur la base du nombre de mots dans un énoncé comme hypothèse à partir du résultat de reconnaissance vocale; et
la détermination s'il faut accepter l'intention sur la base de l'indice de pertinence de confiance combiné (308, 310, 314).

**2.** Procédé selon la revendication 1, dans lequel la détermination s'il faut accepter l'intention sur la base de l'indice de pertinence de confiance combiné comprend en outre:

la comparaison de l'indice de pertinence de confiance combiné à un premier seuil (308); et
l'acceptation de l'intention lorsque l'indice de pertinence de confiance combiné est supérieur au premier seuil (310).

**3.** Procédé selon la revendication 1 ou la revendication 2, dans lequel la détermination s'il faut accepter l'intention sur la base de l'indice de pertinence de confiance combiné comprend en outre:

la comparaison de l'indice de pertinence de confiance combiné à un second seuil (314); et
le rejet de l'intention lorsque l'indice de pertinence de confiance combiné est inférieur ou égal au second seuil (318), et optionnellement la détermination s'il faut accepter l'intention sur la base de l'indice de pertinence de confiance combiné comprend en outre:

la réinvitation d'un utilisateur lorsque l'indice de pertinence de confiance combiné est inférieur ou égal au second seuil (316).

**4.** Procédé selon l'une quelconque des revendications précédentes, dans lequel la détermination s'il faut accepter l'intention sur la base de l'indice de pertinence de confiance combiné comprend en outre:

la comparaison de l'indice de pertinence de confiance combiné à un premier seuil et à un second seuil (308, 314); et
la demande à un utilisateur de confirmer l'énoncé comme hypothèse à partir du résultat de reconnaissance vocale et une intention estimée à partir de l'association du résultat de reconnaissance vocale à une intention lorsque le second seuil est inférieur à l'indice de pertinence de confiance combiné qui est inférieur ou égal au premier seuil (316).

**5.** Procédé selon l'une quelconque des revendications précédentes, dans lequel une combinaison du premier indice de pertinence de confiance avec le second indice de pertinence de confiance pour former un indice de pertinence de confiance combiné comprend en outre:

l'utilisation d'une technique de régression linéaire pour calculer l'indice de pertinence combiné.

6. Procédé selon l'une quelconque des revendications précédentes, dans lequel:

la combinaison du premier indice de pertinence de confiance avec le second indice de pertinence de confiance pour former un indice de pertinence de confiance combiné comprend en outre:
le calcul de l'indice de pertinence combiné selon: ns = $\beta_1$+ $\beta_2$ x e($\hat{w}$) + $\beta_3$ x e($\hat{c}$) + $\beta_4$ x |$\hat{w}$|, où ns est l'indice de pertinence de confiance combiné, $\beta_1$, $\beta_2$, $\beta_3$, et $\beta_4$ sont des paramètres de régression, e($\hat{w}$) est le premier indice de pertinence de confiance, e($\hat{c}$) est le second indice de pertinence de confiance, et |$\hat{w}$| est le nombre de mots dans l'énoncé comme hypothèse.

7. Procédé selon l'une quelconque des revendications précédentes, dans lequel la combinaison du premier indice de pertinence de confiance avec le second indice de pertinence de confiance pour former un indice de pertinence de confiance combiné comprend en outre:

l'utilisation d'une technique de régression logique pour calculer l'indice de pertinence combiné.

8. Procédé selon l'une quelconque des revendications 1 à 4 et 7 dans lequel:

la combinaison du premier indice de pertinence de confiance avec le second indice de pertinence de confiance pour former un indice de pertinence de confiance combiné comprend en outre:

le calcul de l'indice de pertinence de confiance combiné selon

$$ns = \frac{1}{1+e^{\gamma_1+\gamma_2 \cdot e(\tilde{w})+\gamma_3 \cdot e(\hat{c})+\gamma_4 \cdot |\hat{w}|}}$$

où ns est le niveau de confiance combiné, $\gamma_1$, $\gamma_2$, $\gamma_3$, et $\gamma_4$ sont des paramètres de régression, e($\hat{w}$) est le premier indice de pertinence de confiance, e($\hat{c}$) est le second indice de pertinence de confiance, et |$\hat{w}$| est le nombre de mots dans l'énoncé comme hypothèse.

9. Procédé selon l'une quelconque des revendications précédentes, dans lequel la combinaison du premier indice de pertinence de confiance avec le second indice de pertinence de confiance pour former un indice de pertinence de confiance combiné comprend en outre:

l'utilisation d'une technique d'arbre de décision pour déterminer l'indice de pertinence de confiance combiné, la technique d'arbre de décision comprenant préférablement:

le suivi d'un ensemble de règles pour trier vers le bas un arbre à partir d'une racine jusqu'à un noeud de feuille; et
le calcul de l'indice de pertinence de confiance combiné sur la base d'une probabilité que l'intention de l'énoncé est correctement classifiée sur le noeud de feuille.

10. Système de dialogue vocal (200) comprenant:

un premier composant (302) configuré pour fournir un premier indice de pertinence de confiance indiquant un niveau de confiance dans un résultat de reconnaissance vocale de la reconnaissance d'un énoncé;
un second composant (304) configuré pour fournir un second indice de pertinence de confiance indiquant un niveau de confiance de l'association d'un résultat de reconnaissance vocale à une intention;
un troisième composant configuré pour combiner (306) le premier indice de pertinence de confiance avec le second indice de pertinence de confiance pour former un indice de pertinence de confiance combiné, **caractérisé en ce que** l'indice de pertinence de confiance combiné est calculé sur la base du nombre de mots dans une hypothèse à partir du résultat de reconnaissance vocale; et

un quatrième composant configuré pour déterminer s'il faut accepter l'intention sur la base de l'indice de pertinence de confiance combiné (308, 310; 314).

11. Système de dialogue vocal selon la revendication 10, dans lequel le troisième composant est compris dans l'un des second et quatrième composants.

12. Système de dialogue vocal selon la revendication 10 ou 11, dans lequel le quatrième composant est en outre configuré pour:

comparer l'indice de pertinence de confiance combiné à un premier seuil (308); et
accepter l'intention lorsque l'indice de pertinence de confiance combiné est plus grand que le premier seuil (310).

13. Système de dialogue vocal selon l'une quelconque des revendications 10 à 12, dans lequel le quatrième composant est en outre configuré pour:

comparer l'indice de pertinence de confiance combiné à un second seuil (314); et
rejeter l'intention lorsque l'indice de pertinence de confiance combiné est inférieur ou égal au second seuil (318), et optionnellement le quatrième composant est en outre configuré pour:

réinviter un utilisateur lorsque l'indice de pertinence de confiance combiné est inférieur ou égal au second seuil (316).

14. Système de dialogue vocal selon l'une quelconque des revendications 10 à 13, dans lequel le quatrième composant est en outre configuré pour:

comparer l'indice de pertinence de confiance combiné à un premier seuil et à un second seuil (308, 314); et
demander à un utilisateur de confirmer un énoncé comme hypothèse à partir du résultat de reconnaissance vocale et une intention estimée à partir de l'association du résultat de reconnaissance vocale à une intention lorsque le second seuil est inférieur à l'indice de pertinence de confiance combiné qui est inférieur ou égal au premier seuil.

15. Système de dialogue vocal selon l'une quelconque des revendications 10 à 14, dans lequel:

le premier composant est en outre configuré pour fournir le nombre de mots dans l'énoncé comme hypothèse à partir du résultat de reconnaissance vocale, et
le troisième composant est en outre configuré pour calculer l'indice de pertinence de confiance combiné selon:
$ns = \beta_1 + \beta_2 \times e(\hat{w}) + \beta_3 \times e(\hat{c}) + \beta_4 \times |\hat{w}|$, où ns est l'indice de pertinence de confiance combiné, $\beta_1$, $\beta_2$, $\beta_3$ et $\beta_4$ sont des paramètres de régression, $e(\hat{w})$ est le premier indice de pertinence de confiance, $e(\hat{c})$ est le second indice de pertinence de confiance, et $|\hat{w}|$ le nombre de mots dans l'énoncé comme hypothèse.

16. Système de dialogue vocal selon l'une quelconque des revendications 10 à 14, dans lequel
le premier composant est en outre configuré pour fournir le nombre de mots dans l'énoncé comme hypothèse à partir du résultat de reconnaissance vocale, et
le troisième composant est en outre configuré pour calculer l'indice de pertinence de confiance combiné selon:

$$ns = \frac{1}{1 + e^{\gamma_1 + \gamma_2 \times e(\hat{w}) + \gamma_3 \times e(\hat{c}) + \gamma_4 \times |\hat{w}|}}$$

où ns est l'indice de pertinence de confiance combiné, $\gamma_1$, $\gamma_2$, $\gamma_3$, et $\gamma_4$ sont des paramètres de régression, $e(\hat{w})$ est le premier indice de pertinence de confiance, $e(\hat{c})$ est le second indice de pertinence de confiance, et $|\hat{w}|$ est le nombre de mots de l'énoncé comme hypothèse.

17. Système de dialogue vocal selon l'une quelconque des revendications 10 à 16, dans lequel le troisième composant est en outre configuré pour:

utiliser une technique d'arbre de décision pour déterminer l'indice de pertinence de confiance combiné.

**18.** Support lisible par machine ayant une pluralité d'instructions exécutables par machine comprises dans celui-ci, la pluralité d'instructions comprenant:

des instructions pour fournir un premier indice de pertinence de confiance indiquant un niveau de confiance dans un résultat de reconnaissance vocale de la reconnaissance d'un énoncé (302);

des instructions pour fournir un second indice de pertinence de confiance indiquant un niveau de confiance de l'association du résultat de reconnaissance vocale à une intention (304);

des instructions pour combiner le premier indice de pertinence de confiance avec le second indice de pertinence de confiance pour former un indice de pertinence de confiance combiné (306), **caractérisées en ce que** l'indice de pertinence de confiance combiné est calculé sur la base du nombre de mots dans un énoncé comme hypothèse à partir du résultat de reconnaissance vocale; et

des instructions pour déterminer s'il faut accepter l'intention sur la base de l'indice de pertinence de confiance combiné (308, 310, 314).

**19.** Support lisible par machine selon la revendication 18, comprenant en outre:

des instructions pour comparer l'indice de pertinence de confiance combiné à un premier seuil (308); et

des instructions pour accepter l'intention lorsque l'indice de pertinence de confiance combiné est supérieur au premier seuil (310).

**20.** Support lisible par machine selon la revendication 18 ou 19, comprenant en outre:

des instructions pour comparer l'indice de pertinence de confiance combiné à un second seuil (314); et

des instructions pour rejeter l'intention lorsque l'indice de pertinence de confiance combiné est inférieur ou égal au second seuil (318), et comprenant en outre optionnellement:

des instructions pour réinviter un utilisateur lorsque l'indice de pertinence de confiance combiné est inférieur ou égal au second seuil (316).

**21.** Support lisible par machine selon l'une quelconque des revendications 18 à 20, comprenant en outre:

des instructions pour comparer l'indice de pertinence de confiance combiné à un premier seuil et à un second seuil (308, 314); et

des instructions pour demander à un utilisateur de confirmer l'énoncé comme hypothèse à partir du résultat de reconnaissance vocale et une intention estimée à partir de l'association du résultat de reconnaissance vocale à une intention lorsque le second seuil est inférieur à l'indice de pertinence de confiance combiné qui est inférieur ou égal au premier seuil (316).

**22.** Support lisible par machine selon la revendication 21, comprenant en outre:

des instructions pour fournir le nombre de mots dans l'énoncé comme hypothèse à partir du résultat de reconnaissance vocale, et

des instructions pour calculer l'indice de pertinence de confiance combiné selon: $ns = \beta_1 + \beta_2 x\, e(\hat{w}) + \beta_3 x\, e(\hat{c}) + \beta_4 x\, |\hat{w}|$, où ns est l'indice de pertinence de confiance combiné, $\beta_1$, $\beta_2$, $\beta_3$, et $\beta_4$ sont des paramètres de régression, $e(\hat{w})$ est le premier indice de pertinence de confiance, $e(\hat{c})$ est le second indice de pertinence de confiance, et $|\hat{w}|$ est le nombre de mots de l'énoncé comme hypothèse.

**23.** Support lisible par machine selon la revendication 21, comprenant en outre:

des instructions pour fournir le nombre de mots dans l'énoncé comme hypothèse à partir du résultat de reconnaissance vocale, et

des instructions pour calculer l'indice de pertinence de confiance combiné selon

$$ns = \frac{1}{1 + e^{\gamma_1 + \gamma_2 x e(\hat{w}) + \gamma_3 x e(\hat{c}) + \gamma_4 x |\hat{w}|}}$$

où ns est l'indice de pertinence de confiance combiné, $\gamma_1$, $\gamma_2$, $\gamma_3$, et $\gamma_4$ sont des paramètres de régression, e(w) est le premier indice de pertinence de confiance, e(C) est le second indice de pertinence de confiance, et $|\hat{w}|$ est le nombre de mots de l'énoncé comme hypothèse.

24. Support lisible par machine selon l'une des revendications 18 à 23, comprenant en outre:

   des instructions pour utiliser une technique d'arbre de décision pour déterminer l'indice de pertinence combiné.

## FIG. 1

## FIG. 2

*FIG. 3*

START

OBTAIN DATA FROM ASR MODULE — 302

OBTAIN DATA FROM SLU MODULE — 304

COMBINE SCORES TO FORM NEW SCORE — 306

308 — NEW SCORE > $t_1$ ?

YES → ACCEPT CALL-TYPE — 310

NO

314 — $t_2$ < NEW SCORE ?

YES

316 — ASK USER TO CONFIRM AND VERIFY ESTIMATED INTENT

NO → REJECT UTTERANCE AND REPROMPT USER — 318

TAKE APPROPRIATE ACTION — 312

RETURN

*FIG. 4*

|  | TRAINING SET | DEV. SET | TEST SET |
|---|---|---|---|
| NO. OF UTTERANCES | 9,094 | 5,171 | 6,296 |
| ASR WORD ACC. | – | 68.8% | 70.2% |
| SLU ACC. (ASR OUTPUT) | – | 65.65% | 62.81% |
| SLU ACC. (TRANSCRIPTIONS) | – | 75.22% | 71.68% |

# FIG. 5

SLU SCORES
(CONFIDENCE OF THE TOP
SCORING CALL-TYPES)

SLU
ACCURACY (%)

ASR UTTERANCE CONFIDENCE SCORES

EP 1 679 694 B1

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **R.E. SCHAPIRE ; Y. SINGER.** Boostexter: A boosting-based system for text categorization. *Machine Learning,* 2000, vol. 39 (2/3), 135-168